# EUROPEAN PATENT APPLICATION

(11) **EP 3 385 059 A1**
(43) Date of publication of application: **10.10.2018**
(21) Application number: 15909702.1
(22) Date of filing: 30.11.2015
(51) Int. Cl.: B29C 67/00, B33Y 10/00, B33Y 30/00, B33Y 50/00, G02B 1/04

(54) **OPTICAL ELEMENT MANUFACTURING APPARATUS AND OPTICAL ELEMENT MANUFACTURING METHOD**

(71) Applicant: Olympus Corporation, Tokyo 192-8507 (JP)
(72) Inventor: HANANO, Kazunari, Tokyo 192-8507 (JP); YAMAZAKI, Takeshi, Tokyo 192-8507 (JP); MAEDA, Yoshihiro, Tokyo 192-8507 (JP); MIYAZAKI, Kanto, Tokyo 192-8507 (JP); HIRATA, Tadashi, Tokyo 192-8507 (JP); KODAMA, Hiroshi, Tokyo 192-8507 (JP)
(74) Representative: Winter, Brandl, Fürniss, Hübner, Röss, Kaiser, Polte - Partnerschaft mbB
(86) International application number: PCT/JP2015/083608
(87) International publication number: WO 2017/094072

(57) **Abstract**

An optical device production apparatus 10 includes: an additive manufacturing means that manufactures an optical device 70 by successively building layers of optical material; and an acquisition means that acquires a result of measurement of an optical performance of an optical system including the optical device manufactured. The additive manufacturing means terminates manufacturing the optical device on the condition that the result of measurement acquired by the acquisition means meets a predetermined condition. The optical device production apparatus 10 may further include a manufactured form computation means that computes a manufactured form for manufacturing the optical device 70, based on the result of measurement acquired by the acquisition means. The additive manufacturing means may manufacture the optical device 70 in accordance with the manufactured form computed by the manufactured form computation means.

## Description

### [TECHNICAL FIELD]

The present invention relates to an optical device production apparatus and an optical device production method.

### [BACKGROUND ART]

A variety of optical devices such as a lens are used in imaging optical systems for imaging an object by using an imaging device such as a CCD and CMOS and in illumination optical systems for illuminating an object with an illumination light of a uniform intensity. The curved surface form, etc. of these optical devices is designed to ensure that the optical system in which the optical devices are built has desired optical performance, and the optical devices are formed in accordance with designed form data. Generally, die machining, cutting work, polishing processing, or the like is used as a method of forming an optical device.

Recently, three-dimensional manufacturing apparatuses known as 3D printers have been put into practical use and are highlighted as apparatuses capable of forming 3D manufactured articles easily and in an integrated manner. For example, articles are manufactured in apparatuses using a resin material by successively building layers each produced by irradiating a photo-curable resin with ultraviolet light to solidify the resin partially. A technology for shaping an optical device having a desired form by using 3D manufacturing apparatuses like these is proposed (see, for example, patent documents 1, 2). There is also proposed a technology of controlling a manufacturing condition so that an error in the manufactured form is within a permitted range (see, for example, patent documents 3, 4).

[patent document 1] JP2007-8004
[patent document 2] JP2014-109752
[patent document 3] JP9-76353
[patent document 4] JP2004-9574

### [PROBLEM TO BE SOLVED BY THE INVENTION]

The present invention has been made in view of these situations, and an illustrative purpose of an embodiment is to provide an optical device production technology capable of producing an optical device having desired optical performance in an additive manufacturing method.

### [MEANS TO SOLVE THE PROBLEM]

An embodiment of the present invention relates to an optical device production apparatus. The optical device production apparatus includes: an additive manufacturing means that manufactures an optical device by successively building layers of optical material; and an acquisition means that acquires a result of measurement of an optical performance of an optical system including the optical device manufactured. The additive manufacturing means terminates manufacturing ¥the optical device on the condition that the result of measurement acquired by the acquisition means meets a predetermined condition.

Another embodiment of the present invention relates to a method of producing an optical device. The method comprises: manufacturing an optical device by successively building layers of optical material; and acquiring a result of measurement of an optical performance of an optical system including the optical device manufactured. Manufacturing of the optical device is terminated on the condition that the result of measurement of the optical performance of the optical system meets a predetermined condition.

Optional combinations of the aforementioned constituting elements, and implementations of the invention in the form of methods, apparatuses, and systems may also be practiced as additional modes of the present invention.

### [ADVANTAGE OF THE INVENTION]

According to an embodiment of the present invention, an optical device having desired optical performance can be produced in an additive manufacturing method.

### [BRIEF DESCRIPTION OF THE DRAWINGS]

Fig. 1 schematically shows a configuration of an optical device production apparatus according to an embodiment;
Fig. 2 is a block diagram schematically showing a functional configuration of the controller;
Figs. 3A-3C schematically show how the optical device is manufactured;
Figs. 4A-4C schematically show how the optical device is manufactured;
Fig. 5 is a flowchart showing a method of producing the optical device;
Fig. 6 schematically shows a configuration of an optical device production apparatus according to an embodiment;
Figs. 7A-7C schematically show how the optical device is manufactured;
Figs. 8A-8C schematically show how the optical device is manufactured;
Fig. 9 is a flowchart showing a method of producing the optical device;
Fig. 10 schematically shows a configuration of an optical device production apparatus according to an embodiment;
Figs. 11A-11C schematically show how the optical device is manufactured;
Fig. 12 is a flowchart showing a method of producing the optical device;
Fig. 13 schematically shows a configuration of an optical device production apparatus according to an embodiment;
Fig. 14 schematically shows how the optical device is manufactured; and
Fig. 15 schematically shows a method of measuring the optical performance according to an embodiment.

### [MODE FOR CARRYING OUT THE INVENTION]

First, some of the embodiments according to the invention will be summarized. One embodiment of the present invention relates to an optical device production apparatus. The optical device production apparatus comprises: an additive manufacturing means that manufactures an optical device by successively building layers of optical material; and an acquisition means that acquires a result of measurement of an optical performance of an optical system including the optical device manufactured. The additive manufacturing means terminates manufacturing the optical device on the condition that the result of measurement acquired by the acquisition means meets a predetermined condition.

According to this embodiment, an optical device can be manufactured such that the optical performance is measured during the manufacturing process. Accordingly, an optical device that meets desired optical performance can be produced without requiring an extra step for post-manufacturing measurement of the optical performance.

The optical device production apparatus may further comprise a manufactured form computation means that computes a manufactured form for manufacturing the optical device, based on the result of measurement acquired by the acquisition means. The additive manufacturing means may manufacture the optical device in accordance with the manufactured form computed by the manufactured form computation means. According to this embodiment, the optical device can be formed in accordance with the manufactured form computed based on the result of measurement of the optical performance. Therefore, the optical device having desired optical performance can be formed instantaneously.

The acquisition means may acquire the result of measurement of the optical performance of the optical system including the optical device being manufactured, the manufactured form computation means may compute the manufactured form built on the optical device being manufactured, based on the result of measurement of the optical performance of the optical system being manufactured, and the additive manufacturing means may build a layer of optical material on the optical device being manufactured in accordance with the manufactured form computed by the manufactured form computation means based on the result of measurement of the optical performance of the optical system being manufactured.

The acquisition means may acquire the result of measurement of the optical performance of the optical system before the optical device is manufactured, the manufactured form computation means may compute the manufactured form of the optical device based on the result of measurement of the optical performance of the optical system before the optical device is manufactured, and the additive manufacturing means may build a layer of optical material in accordance with the manufactured form computed by the manufactured form computation means based on the result of measurement of the optical performance of the optical system before the optical device is manufactured.

The manufactured form computation means may compute manufactured form of a compensation optical device for compensating the optical performance of the optical system before the optical device is manufactured, and the additive manufacturing means may manufacture the compensation optical device by building a layer of optical material in accordance with the manufactured form of the compensation optical device computed by the manufactured form computation means.

The optical system may include a base member positioned at one end of the optical system. The additive manufacturing means may manufacture the optical device by building a layer of optical material on the base member.

The additive manufacturing means may be configured to build a layer of photo-curable resin on the base member by ultraviolet irradiation, and the base member may be configured to reduce an amount of ultraviolet transmittance.

The additive manufacturing means may manufacture the optical device so that an optical face of the optical device is a rotationally asymmetric face.

The acquisition means may acquire a result of measurement of light transmitted through the optical system.

The optical system may be an imaging optical system including an imaging device and an imaging lens. The acquisition means may acquire image data captured by the imaging device.

The optical system may be an illumination optical system including a light source and an illumination lens. The acquisition means may acquire a result of measurement of an illumination light output from the illumination optical system.

Another embodiment of the present invention relates to a method of producing an optical device. The method comprises: manufacturing an optical device by successively building layers of optical material; and acquiring a result of measurement of an optical performance of an optical system including the optical device manufactured. Manufacturing of the optical device is terminated on the condition that the result of measurement of the optical performance of the optical system meets a predetermined condition.

According to this embodiment, an optical device can be manufactured such that the optical performance is measured during the manufacturing process. Accordingly, an optical device that meets desired optical performance can be produced without requiring an extra step for post-manufacturing measurement of the optical performance.

The method may further comprise: providing a protective member for protecting an optical face of the optical device manufactured into the optical system.

A description will be given of the embodiments of the present invention with reference to the drawings. In the explanations of the figures, the same elements shall be denoted by the same reference numerals, and duplicative explanations will be omitted appropriately. The structure described below is by way of example only and does not limit the scope of the present invention.

### (First embodiment)

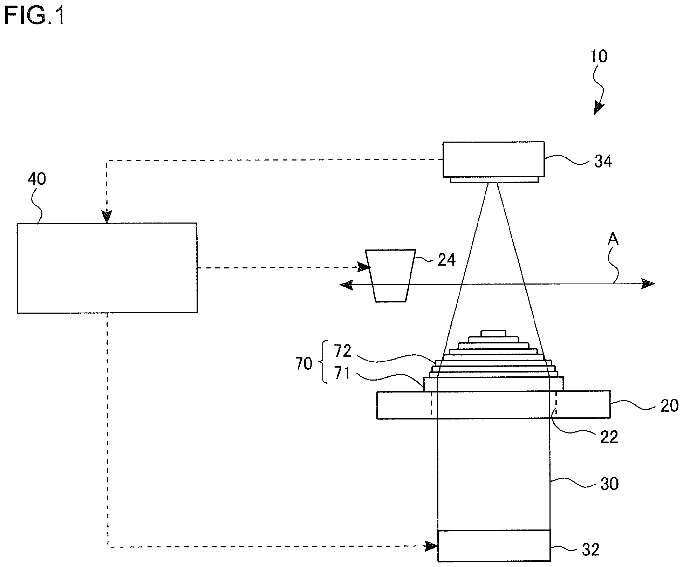

Fig. 1 schematically shows a configuration of an optical device production apparatus 10 according to the first embodiment. The optical device production apparatus 10 includes a stage 20, a manufacturing head 24, a light source 32, a sensor 34, and a controller 40.

The optical device production apparatus 10 produces an optical device 70 by manufacturing a stack 72 on a base member 71 supported by the stage 20. The optical device production apparatus 10 measures the optical performance of the optical device 70 by using the sensor 34 to measure a measurement light 30 output from the light source 32 and transmitted through the optical device 70. The optical device production apparatus 10 refers to the result of measurement of the optical performance and additively manufactures the optical device 70 by correcting a gap between the actual measurement and the target value of the optical performance of the optical device 70. In this embodiment, a convex lens is described as being formed as the optical device 70. This is not, however, intended to limit the scope of the type of optical device manufactured.

The stage 20 is a member for supporting the base member 71 and is, for example, comprised of a plate-shaped member for mounting the base member 71. The stage 20 fixes the base member 71 such that the position of the base member 71 does not move while the optical device 70 is being manufactured and while the optical performance of the optical device 70 is being measured. An opening 22 for transmitting the measurement light 30 from the light source 32 into the optical device 70 is provided at the center of the stage 20. The stage 20 may not support the base member 71 from below but may support the base member 71 from the side.

The manufacturing head 24 is an additive manufacturing means for supplying an optical material for manufacturing the stack 72 to the base member 71 to build a stack of layers. For example, the manufacturing head 24 is configured to supply a photo-curable liquid resin on the base member 71 and solidify the supplied photo-curable liquid resin by irradiating it with ultraviolet light. The manufacturing head 24 may be configured to supply a melted or softened optical material on the base member 71. Alternatively, the manufacturing head 24 may be configured to supply an optical material in powder form on the base member 71 and sinter the optical material in powder form by irradiating it with a laser beam.

The manufacturing head 24 is configured to be movable in a transversal direction (x direction) and a longitudinal direction (y direction) with respect to the stage 20. The arrow A in Fig. 1 shows the manufacturing head 24 scanning in the x direction. The manufacturing head 24 forms a layer structure of a desired form on the base member 71 by supplying the optical material on the base member 71 while moving in the x direction and the y direction. The manufacturing head 24 may be configured to be movable in a vertical or perpendicular direction (z direction). Layers of optical material may be built on the base member 71 by changing the position of the manufacturing head 24 in the perpendicular direction in accordance with the height of the stack 72 successively built. The manufacturing head 24 is connected to the controller 40 and is operated based on a command from the controller 40.

The light source 32 radiates the measurement light 30 for measuring the optical performance of the optical device 70 toward the optical device 70. The light source 32 is configured to output the measurement light 30 having optical characteristics suitable for the measurement of the optical performance of the optical device 70. For example, the light source 32 is configured to output the collimated measurement light 30 so that the light incident on the base member 71 is parallel so as to enable measurement of the image forming performance of the optical device 70 manufactured as a convex lens. The configuration of the light source 32 is non-limiting and the light source 32 may be configured to output an illumination light having suitable characteristics depending on the type of optical performance of the optical device 70 sought to be measured. The light source 32 may be configured to cause a light ray of a small beam diameter such as a laser beam to be incident on an arbitrary position of the optical device 70. Alternatively, the light source 32 may be configured to cause a plurality of light rays to be incident on a plurality of positions at the same time.

The sensor 34 is a measurement means for measuring the optical performance of the optical device 70 by receiving the measurement light 30 transmitted through the optical device 70. The sensor 34 measures the intensity value, intensity distribution, spot diagram, aberrations such as spherical aberration and astigmatism, wavefront aberration, etc. of the measurement light 30. A suitable measurement device is selected as the sensor 34 depending on the optical performance sought to be measured. For example, a photo diode, an imaging device such as a CCD and a CMOS sensor, an interferometer, a Shack-Hartman sensor, etc. may be used as the sensor 34. The sensor 34 may be configured to be capable of measuring a modulation transfer function (MTF) of the measurement light 30. The sensor 34 may be configured such that the position in the light axis direction (z direction) is adjustable so as to enable measurement of a spot diagram, etc. The sensor 34 transmits the result of measurement of the optical performance of the optical device 70 to the controller 40. The light source 32 and the sensor 34 function as a "measurement system" for measuring the optical performance of the optical device 70.

The optical device 70 manufactured is comprised of the base member 71 and the stack 72. The base member 71 is a plate-shaped member that serves as a base of the stack 72 and is made of a glass material, a resin material, or the like for an optical purpose. The base member 71 is made of a material identical to the material used in the stack 72 or a material having the same optical characteristics as the material used in the stack 72. The base member 71 may be made of a material different in type from that of the stack 72. The stack 72 is formed by the manufacturing head 24. The stack 72 has a multi-layered structure in which a plurality of layers of optical material formed by the manufacturing head 24 are stacked.

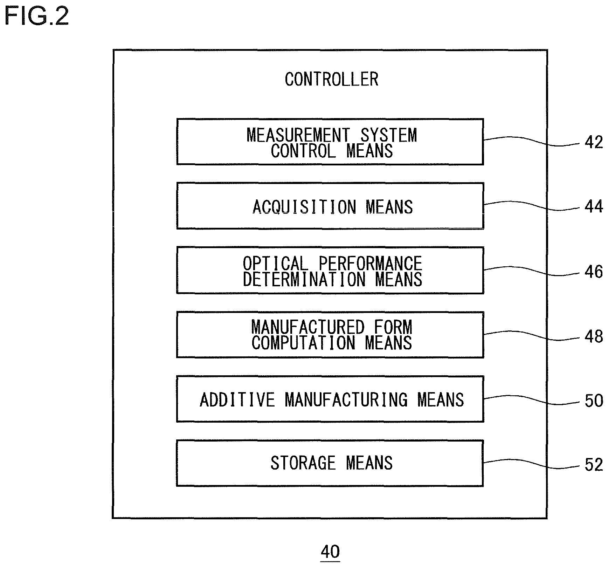

Fig. 2 is a block diagram schematically showing a functional configuration of the controller 40. The controller 40 includes a measurement system control means 42, an acquisition means 44, an optical performance determination means 46, a manufactured form computation means 48, a stack manufacturing control means 50, and a storage means 52.

The blocks depicted in the block diagram of this specification are implemented in hardware such as devices like a CPU of a computer or mechanical units, and in software such as a computer program etc. Fig. 2 depicts functional blocks implemented by the cooperation of these elements. Therefore, it will be obvious to those skilled in the art that the functional blocks may be implemented in a variety of manners by a combination of hardware and software.

The measurement system control means 42 controls the operation of the light source 32 and the sensor 34 that form the measurement system. The measurement system control means 42 controls the sensor 34 to be located at a position suitable for measurement of the optical performance of the optical device 70 and controls the light source 32 to output the measurement light 30 suitable for measurement. The acquisition means 44 acquires the result of measurement of the optical performance of the optical device 70 by the sensor 34. The acquisition means 44 acquires, for example, the intensity value, intensity distribution image, etc. of the measurement light measured by the sensor 34.

The optical performance determination means 46 determines the optical performance of the optical device 70 based on the result of measurement acquired by the acquisition means 44. The optical performance determination means 46 determines whether the acquired result of measurement of the optical performance meets a predetermined condition. The optical performance determination means 46 determines whether a target condition defined based on a target value of the optical performance of the optical device 70 sought to be manufactured and determines whether the optical device 70 manufactured has the desired optical performance. The target condition is maintained in the storage means 52 in advance of the manufacturing in accordance with the optical performance of the optical device 70 sought to be manufactured.

The optical performance determination means 46 may determine whether the optical device 70 is properly manufactured based on the result of measurement acquired by the acquisition means 44. The optical performance determination means 46 may determine whether an error condition, indicating an abnormality in the manufacturing of the optical device 70, is met based on the result of measurement acquired by the acquisition means 44. The error condition is maintained in the storage means 52 in advance. The error condition may be determined in accordance with the optical performance of the optical device 70 sought to be manufactured or determined as a common condition that does not depend on the optical performance of the optical device 70 sought to be manufactured. For example, the light amount measured by the sensor 34 equal to or less than a reference value may be defined as the error condition.

The manufactured form computation means 48 computes the manufactured form for manufacturing the optical device 70, based on the result of measurement acquired by the acquisition means 44. If the target condition is not met, the manufactured form computation means 48 identifies a gap between the result of measurement of the optical performance and the target value and computes the manufactured form necessary to correct the gap. The manufactured form computation means 48 refers to a plurality of types of templates corresponding to the types of gap between the measurement result and the target value and computes parameters of manufactured form data defined for a template based on the result of measurement the optical performance. For example, if an aberration asymmetric with respect to the light axis is measured, a template defining an asymmetric manufactured form for correcting the asymmetry and obtaining an axially symmetric optical performance is used. The plurality of types of templates used for computation of manufactured form are maintained in the storage means 52 in advance.

The stack manufacturing control means 50 controls the operation of the manufacturing head 24 based on the predetermined manufactured form data. The stack manufacturing control means 50 drives the manufacturing head 24 based on the manufactured form data maintained in the storage means 52 in advance or the manufactured form data computed by the manufactured form computation means 48 and controls the manufacturing head 24 so as to form the stack 72 of a form corresponding to the manufactured form data. The stack manufacturing control means 50 may drive the manufacturing head 24 to meet a predetermined manufactured form condition. The stack manufacturing control means 50 may drive the manufacturing head 24 so that the stack 72 is accommodated in a predetermined stack area (area in the xy plane). Alternatively, the stack manufacturing control means 50 may drive the manufacturing head 24 so that the height (z direction) of the manufactured stack 72 is less than a predetermined upper limit value.

The stack manufacturing control means 50 moves the manufacturing head 24 to a predetermined evacuation position so as not to block the measurement light when the optical performance of the optical device 70 is measured. When the optical performance determination means 46 determines that the aforementioned target condition is met, the stack manufacturing control means 50 determines that the manufacturing of the optical device 70 is completed and terminates the manufacturing process. When the optical performance determination means 46 determines that the aforementioned error condition is met, the stack manufacturing control means 50 determines that an abnormality occurs in the manufacturing of the optical device 70 and terminates or suspends the manufacturing process.

The storage means 52 maintains various conditions, manufactured form data, templates, etc. used for the process in the controller 40. A plurality of types of templates are maintained in the storage means 52 in association with the types of optical performance measured by using the measurement means. For example, the correspondence between a) the forms of various aberrations such as spherical aberration, coma aberration, astigmatism, field curvature aberration, and distortion, and the form of wavefront aberration, and b) the manufactured form for correcting the aberrations is stored as templates. Each template may define the correspondence between the degree (magnitude) of aberration and the parameter for adjusting the amount of correction determined by the degree. The correspondence is predefined by a result of simulation using optical design software or actual measurements of the optical performance of the optical device. Each template may be defined based on actual measurements of the optical performance of the optical device of a form corresponding to the stack being manufactured.

The storage means 52 is comprised of, for example, a semiconductor memory, a magnetic disk, or the like. The storage means 52 may be a non-volatile memory such as a read only memory (ROM) and a flash memory or may be a volatile memory such as a dynamic random access memory (DRAM). The storage means 52 may be a hard disk drive. The data maintained in the storage means 52 may be stored in the controller 40 in advance via an installation operation, etc., or may be acquired temporarily from a network connected to the controller 40 and stored accordingly.

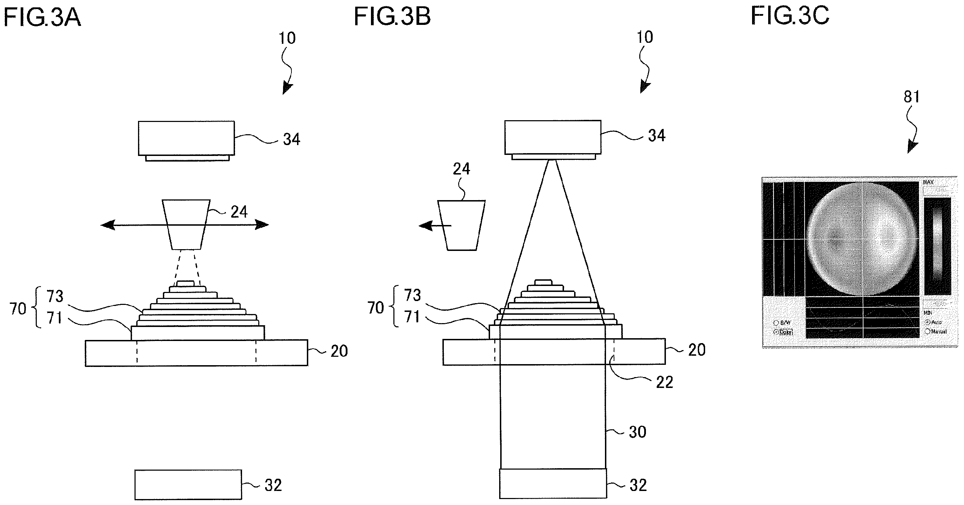

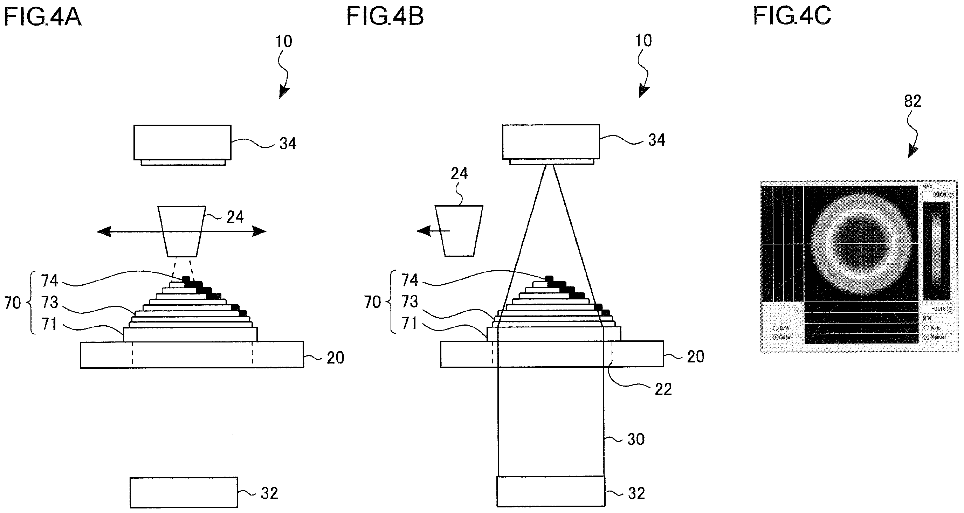

A description will now be given of an exemplary operation of the optical device production apparatus 10 having the above configuration. Figs. 3A-3C and 4A-4C schematically show how the optical device 70 is manufactured. First, as shown in Fig. 3A, a first stack 73 is formed on the base member 71 fixed to the stage 20 by driving the manufacturing head 24 based on predetermined manufactured form data. Subsequently, as shown in Fig. 3B, the optical device 70 being manufactured comprised of the base member 71 and the first stack 73 is irradiated with the measurement light 30 and the optical performance of the optical device 70 is measured by using the sensor 34. Fig. 3C shows a result of measurement 81 of the optical performance of the optical device 70 measured in Fig. 3B. In the illustrated example, the wavefront aberration near the focal point of the measurement light 30 condensed by the optical device 70 is measured.

The result of measurement 81 shown in Fig. 3C shows wavefront aberration with a concavity on the left and a convexity on the right, revealing that a gap from the target value of the optical performance of the optical device 70 sought to be manufactured is created. In other words, the result of measurement 81 shows that the optical performance of the optical device 70 being manufactured does not meet the target condition. Thus, the optical device production apparatus 10 computes the manufactured form for correcting the wavefront aberration shown in Fig. 3C and performs a corrective manufacturing process based on corrective manufactured form data thus computed.

Fig. 4A shows how a corrective manufacturing process is performed. As illustrated, a second stack 74 is built on the first stack 73 manufactured on the base member 71. The second stack 74 is formed in accordance with the corrective manufactured form data computed based on the result of measurement 81 shown in Fig. 3C. In the drawing, the first stack 73 and the second stack 74 are indicated by different shades for ease of understanding, but the first stack 73 and the second stack 74 may be made of the same material. The first stack 73 and the second stack 74 may be manufactured integrally such that they cannot be distinguished from each other when manufactured.

Subsequently, as shown in Fig. 4B, the optical device 70 comprised of the base member 71, the first stack 73, and the second stack 74 is irradiated with the measurement light 30 and the optical performance of the optical device 70 is measured. Fig. 4C shows a result of measurement 82 of the optical performance of the optical device 70 measured in Fig. 4B. The result of measurement 82 shows a wavefront form exhibiting a Gaussian distribution with a convex profile at the center, revealing that the target value of the optical performance of the optical device 70 sought to be manufactured is obtained. Accordingly, the optical device production apparatus 10 determines that the target condition of the optical performance of the optical device 70 is met and terminates the manufacturing process of the optical device 70. This completes the production of the optical device 70 having the desired optical performance.

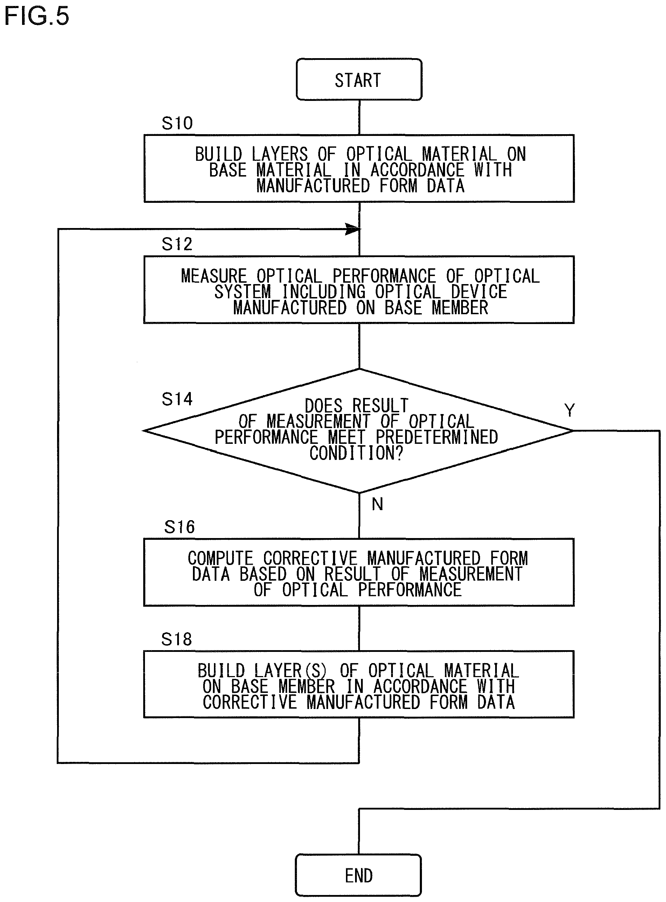

Fig. 5 is a flowchart showing the flow of operation of the optical device production apparatus 10. The optical device production apparatus 10 builds layers of optical material on the base member 71 in accordance with the manufactured form data maintained in advance (S10) and measures the optical performance of the optical system including the optical device 70 manufactured on the base member 71 (S12). If the result of measurement of the optical performance does not meet a predetermined condition (N in S14), the optical device production apparatus 10 computes corrective manufactured form data based on the result of measurement of the optical performance (S16), builds a layer(s) of optical material on the base member 71 in accordance with the corrective manufactured form data (S18), and performs the steps of S12 and S14 again. If the result of measurement of the optical performance meets the predetermined condition (Y in S14), the manufacturing of the optical device 70 is terminated.

According to this embodiment, the optical device 70 can be formed such that the optical performance of the optical device 70 is checked during the manufacturing process. Consequently, the optical device 70 can be formed by defining the optical performance of the optical device 70 sought to be manufactured as the target value, instead of defining the form of the stack 72 formed by the additive manufacturing means on the base member 71 as the target value. This can prevent manufacturing of an optical device in which the desired optical performance cannot be obtained despite a small form error. The optical device 70 in which the desired optical performance is obtained despite a form error can be used as a finished product. Thus, according to this embodiment, the optical device 70 having the necessary optical performance can be ultimately formed by additive manufacturing.

According to this embodiment, any gap created between the result of measurement of the optical performance of the optical device 70 being manufactured and the target value can be corrected so that the optical device 70 having the necessary optical performance can be ultimately formed. In this process, a further stack is built upon the stack already manufactured. Therefore, the form of the optical device 70 ultimately produced may differ from the form initially expected. In the ordinary additive manufacturing method, production of a manufactured object with a form greatly different the predesigned form means a failure in manufacturing. Meanwhile, according to this embodiment, production of a form that differs from the initially expected form means a success in manufacturing if the target optical performance is obtained in the optical device of that form. It is therefore possible to correct the form of the optical device 70 beyond the initially designed form in order to obtain the desired optical performance. This increases the flexibility in correcting the manufactured form and makes it possible to correct gaps in various types of optical performance.

In accordance with this embodiment, additive manufacturing and optical measurement can both be practiced while the optical device 70 remains fixed to the stage 20. Additive manufacturing and optical measurement of the optical device 70 performed by using separate apparatuses require a trouble of moving the optical device 70 between the apparatuses and may result in a shift in the reference position of the optical device 70 associated with the removal of the optical device 70. A shift in the position could result in a failure to obtain the desired optical performance due to a failure to measure the optical performance accurately or formation of a layer in a shifted position as a stack of layers are being built. Meanwhile, according to this embodiment, additive manufacturing and optical measurement can both be practiced while the optical device 70 remains fixed. Accordingly, occurrence of a trouble caused by a shift in the position is prevented and the optical device having the desired optical performance can be efficiently manufactured.

### (Second embodiment)

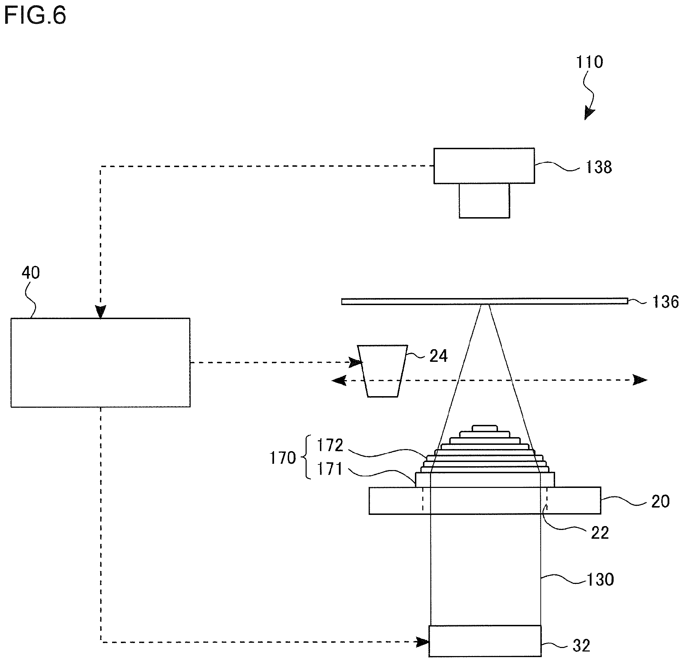

Fig. 6 schematically shows a configuration of an optical device production apparatus 110 according to the second embodiment. The optical device production apparatus 110 manufactures a stack 172 on a base member 171 based on the manufactured form data so as to form an optical device 170 such as a convex lens. The optical device production apparatus 110 differs from the embodiment described above in that the optical device production apparatus 110 is directed to making an optical device for which the required accuracy of optical performance is not so high as compared with the case of the first embodiment and that corrective manufacturing based on the result of measurement of the optical performance is not performed. For example, the optical device 70 according to the first embodiment may be a convex lens for an imaging optical system for which high accuracy is required, and the optical device 170 according to this embodiment may be a convex lens used in, for example, an illumination optical system. A description will be given of the optical device production apparatus 110, highlighting differences from the first embodiment described above.

The optical device production apparatus 110 includes the stage 20, the manufacturing head 24, the light source 32, a screen 136, a camera 138, and the controller 40. The stage 20, the manufacturing head 24, the light source 32, and the controller 40 are configured similarly to those of the first embodiment. The optical device production apparatus 110 differs from the first embodiment in that the screen 136 and the camera 138 are provided as a measurement means instead of the sensor 34.

The screen 136 is a diffusing screen of a transmission type for imaging an optical characteristic of a measurement light 130 transmitted through the optical device 70 by using the camera 138. The screen 136 is provided opposite to the light source 32, sandwiching the stage 20. The screen 136 is provided at a position suitable for measurement of the optical performance of the optical device 70. For example, the screen 136 is positioned at a focal point of the optical device 70 in the case that a convex lens is manufactured as the optical device 70. The screen 136 may be configured such that the position with respect to the optical device 70 in the light axis direction (z direction) is adjustable to enable measurement of the optical performance of optical devices 70 with different focal lengths.

The camera 138 images the measurement light 130 projected onto the screen 136. The camera 138 includes an imaging device such as a CCD and a CMOS and generates an image of the measurement light 30 projected onto the screen 136. The camera 138 transmits the captured image thus generated to the controller 40, as the result of measurement of the optical performance of the optical device 70. In this embodiment, the screen 136 and the camera 138 function as a "measurement means" for measuring the optical performance of the optical device 70.

The controller 40 forms the stack 172 by driving the manufacturing head 24 in accordance with the manufactured form data maintained in the storage means 52. The controller 40 measures the optical performance of the optical device 70 being manufactured before the entire form defined in the manufactured form data is formed, i.e., in the middle of manufacturing. The controller 40 temporarily suspends the manufacturing process and measures the optical performance on the condition that manufacturing has beam completed up to a plurality of check points defined in the manufactured form data or on the condition that a predetermined number of layers have been manufactured. The controller 40 terminates the manufacturing process if the result of measurement of the optical performance meets the target condition. The controller 40 may be configured to terminate the manufacturing process without completely manufacturing the entire form defined in the manufactured form data. The controller 40 also terminates the manufacturing process when the result of measurement of the optical performance meets an error condition.

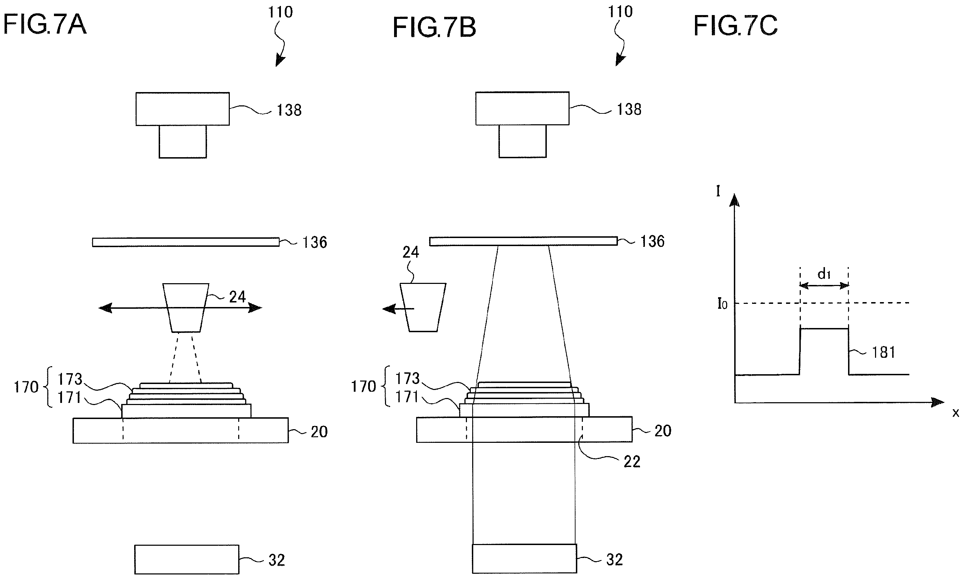

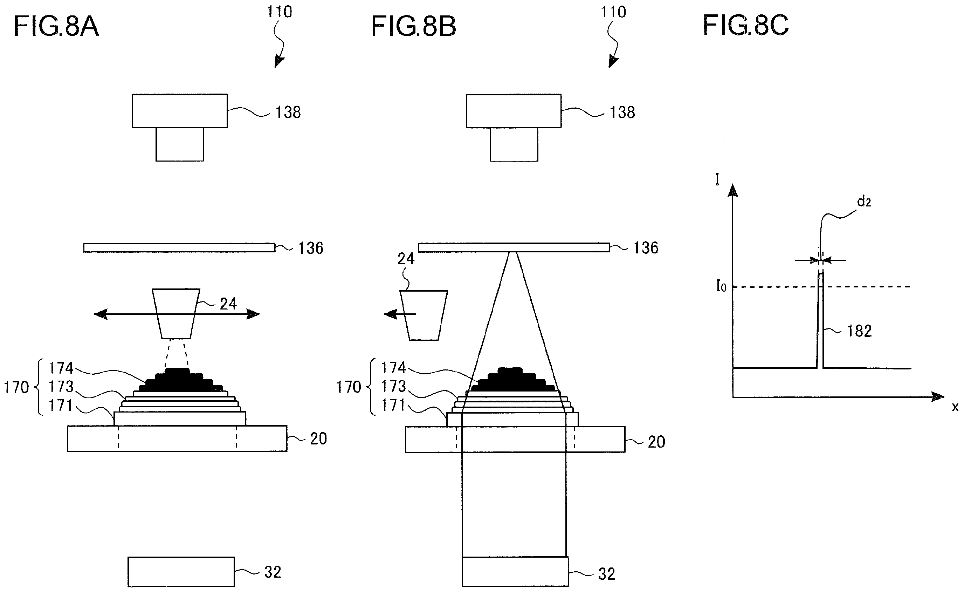

An exemplary operation of the optical device production apparatus 110 having the above configuration will be described. Figs. 7A-7C and Figs. 8A-8C schematically show how the optical device 170 is manufactured. First, as shown in Fig. 7A, the first stack 173 is formed on the base member 171 fixed to the stage 20 by driving the manufacturing head 24 based on predetermined manufactured form data. The first stack 173 corresponds to a part of the entire form defined in the manufactured form data and represents a product formed in the middle of the entire manufacturing process for producing the optical device 70. Subsequently, as shown in Fig. 7B, the optical device 170 in the middle of manufacturing comprised of the base member 171 and the first stack 173 is irradiated with the measurement light 30 and the optical performance of the optical device 170 is measured by using the screen 136 and the camera 138.

Fig. 7C shows a result of measurement 181 of the optical performance of the optical device 170 measured in Fig. 7B. In the illustrated example, the intensity distribution of the measurement light 30 condensed by the optical device 170 on the screen 136 is measured. The light condensing performance of the optical device 170 shown in Fig. 7B is not sufficient because it is in the middle of being manufactured. More specifically, the result of measurement 181 shown in Fig. 7C reveals that the diameter of condensed light d1 is larger than the target value and the intensity of condensed light does not reach the target intensity 10. Accordingly, the optical device production apparatus 110 resumes the temporarily suspended manufacturing process so that the optical device 170 can have the desired optical performance.

Fig. 8A shows how the manufacturing process is continued. As illustrated, a second stack 174 is built on the first stack 173 manufactured on the base member 171. The second stack 174 is formed in accordance with predefined manufactured form data. The second stack 174 is manufactured such that, for example, the form of the first stack 173 and the second stack 174 as combined corresponds to the entire form defined in the manufactured form data or a part thereof. Subsequently, as shown in Fig. 8B, the optical device 170 comprised of the base member 171, the first stack 173, and the second stack 174 is irradiated with the measurement light 30 and the optical performance of the optical device 170 is measured.

Fig. 8C shows a result of measurement 182 of the optical performance of the optical device 170 measured in Fig. 8B. The result of measurement 182 of Fig. 8C shows that the intensity of condensed light exceeds the target intensity 10 and the diameter of condensed light d2 is smaller than the target value, revealing that the target value of the optical performance of the optical device 170 sought to be manufactured is obtained. Accordingly, the optical device production apparatus 110 determines that the optical performance of the optical device 170 meets the target condition and terminates the manufacturing of the optical device 170. This completes the production of the optical device 170 having the desired optical performance.

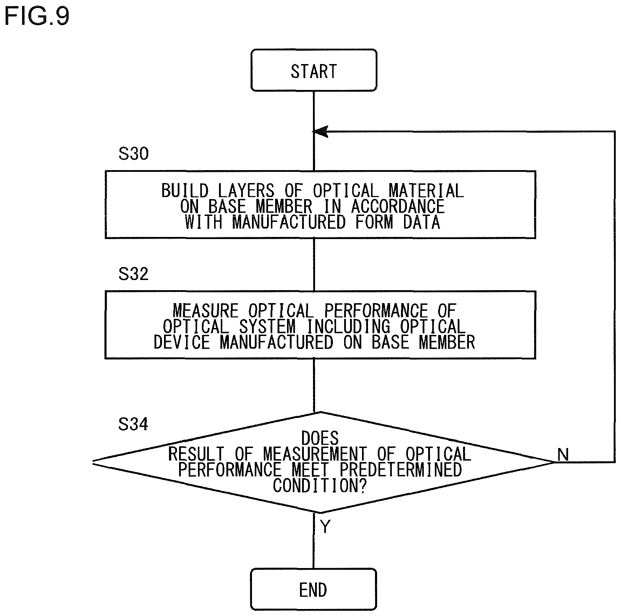

Fig. 9 is a flowchart showing the flow of operation of the optical device production apparatus 110. The optical device production apparatus 110 builds layers of optical material on the base member 171 in accordance with the manufactured form data maintained in advance (S30), and the optical performance of the optical system including the optical device 170 manufactured on the base member 171 is measured (S32). If the result of measurement of the optical performance does not meet a predetermined condition (N in S34), the manufacturing process is continued (S30) and the optical performance is measured again (S32). If the result of measurement of the optical performance meets the predetermined condition (Y in S34), the manufacturing of the optical device 170 is terminated.

In accordance with this embodiment, it is possible to manufacture the optical device 170 in accordance with the predetermined manufactured form data, checking the optical performance of the optical device 170 being manufactured during the process. Therefore, the manufacturing process can be terminated at a point of time when the optical device 170 having the desired optical performance is obtained even if the manufacturing process defined in the manufactured form data has not been fully completed. If a predetermined error condition is met in the middle of manufacturing, the manufacturing process can be terminated at that point of time. This can increase the efficiency of producing the optical device 170.

### (Third embodiment)

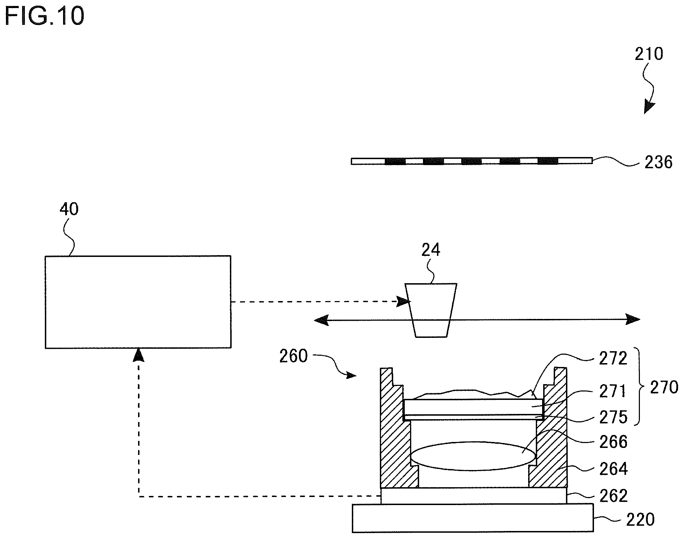

Fig. 10 schematically shows a configuration of an optical device production apparatus 210 according to a third embodiment. The optical device production apparatus 210 produces an optical device 270 built in the optical system of an imager 260. The imager 260 is a device built in a digital camera, an optical microscope, or the like as an imaging module. The optical device production apparatus 210 differs from the foregoing embodiments in that the optical device production apparatus 210 is not provided with a measurement means and uses the imager 260 in which the optical device 270 is built as a measurement means. A description will now be given of the optical device production apparatus 210, highlighting difference from the foregoing embodiments.

The optical device production apparatus 110 includes a fixture 220, the manufacturing head 24, an evaluation chart 236, and the controller 40. The manufacturing head 24 and the controller 40 are configured similarly to those of the foregoing embodiments.

The fixture 220 is a member for supporting the imager 260 and fixes the imager 260 at a position suitable for the manufacturing of the optical device 270. The evaluation chart 236 is a test chart for measuring the optical performance of the imager 260. The type of the evaluation chart 236 is non-limiting. For example, a resolution chart, a lattice chart for measuring distortion, a dot chart for measuring field curvature aberration, etc. may be used as the evaluation chart 236. The evaluation chart 236 may be configured such that the position from the optical device 270 in the light axis direction (z direction) is adjustable to enable measurement of the optical performance at different points of focus.

The imager 260 includes an imaging device 262, a housing 264, an imaging lens 266, and an optical device 270. The imaging device 262 is an image sensor such as a CCD and a CMOS. The housing 264 is a member for accommodating and fixing the imaging lens 266 and the optical device 270 and has a recess or a step to allow these optical components to be mounted. The imaging lens 266 forms an optical image imaged by the imager 260 on the imaging device 262. The imaging lens 266 is illustrated as a single convex lens, but the configuration of the imaging lens 266 is non-limiting and a lens group including a plurality of lenses may form the imaging lens 266.

The optical device 270 is a compensation optical device for compensating the optical performance of the imager 260. For example, the optical device 270 is used to compensate the aberration caused by the imaging lens 266 or compensate the aberration caused by the installation allowance of components forming the imager 260. For example, the optical device 270 is configured to compensate the asymmetric aberration created in the imager 260 and is configured such that the optical face formed by a stack 272 is a rotationally asymmetric face. For example, the optical device 270 may be configured such that the thickness of the stack 272 at the center of the imaging face of the imager 260 may differ from that of the periphery or may have an axially asymmetric anamorphic form or free-form surface form, so as to compensate the wavefront aberration between the center and the periphery. The optical device 270 may be a diffraction optical device adapted to compensate the chromatic aberration of the imager 260.

The optical device 270 is formed by manufacturing the stack 272 on the base member 271 mounted in the housing 264 of the imager 260. The base member 271 includes an ultraviolet light shielding layer 275 and prevents the ultraviolet light radiated from the manufacturing head 24 from impinging upon the imaging device 262 while the stack 272 is being manufactured. For example, the ultraviolet light shielding layer 275 is a dielectric multilayer film configured to transmit visible light and shield ultraviolet light. The base member 271 may be made of a material such as acrylic resin that absorbs ultraviolet light instead of providing the ultraviolet light shielding layer 275.

The imager 260 fixed on the fixture 220 is connected to the controller 40. The imager 260 is operated based on a control signal from the controller 40 and images the evaluation chart 236. The imager 260 transmits an image of the evaluation chart 236 to the controller 40. This allows the imager 260 to function as a measurement means of the optical device production apparatus 210.

The controller 40 acquires the image of the evaluation chart 236 as the result of measurement of the optical performance of the imager 260 and determines the optical performance of the imager 260 based on the acquired result of measurement. If the result of measurement of the optical performance does not meet the target condition, the controller 40 computes a manufactured form of the compensation optical device for compensating the optical performance. The controller 40 forms the optical device 270 by manufacturing the stack 272 on the base member 271 based on the computed manufactured form data.

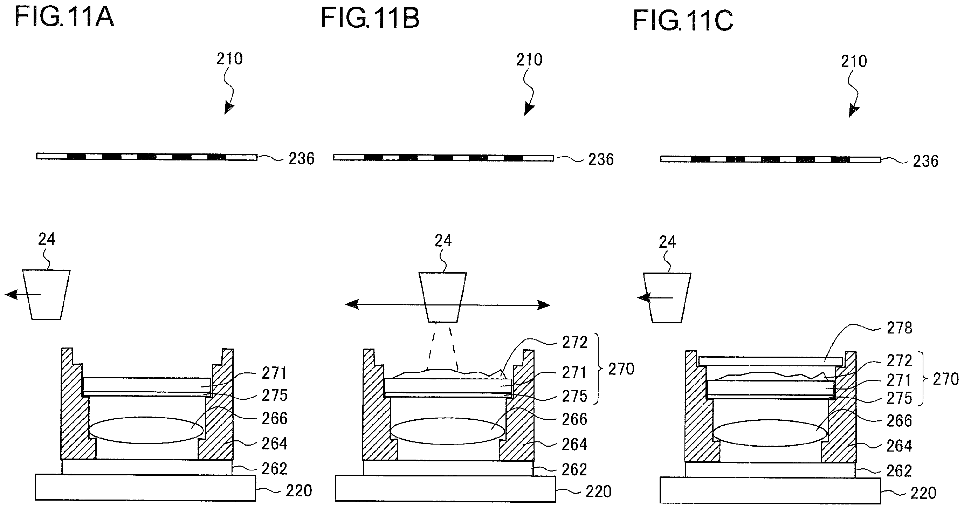

A description will now be given of an exemplary operation of the optical device production apparatus 210 having the above configuration. Figs. 11A-11C schematically show how the optical device 270 is manufactured. First, the imager 260 is mounted on the fixture 220 as shown in Fig. 11A. In this state, the imaging lens 266 and the base member 271 forming the imaging optical system are mounted in the housing 264, and the base member 271 is arranged at one end of the imaging optical system and is exposed. The optical device production apparatus 210 causes the imager 260 in this state to capture an image of the evaluation chart 236 and acquires a captured image indicating the optical performance of the imager 260 for which compensation by the optical device 270 is not made. The optical device production apparatus 210 computes manufactured form data for the stack 272 manufactured on the base member 271 based on the captured image indicating the optical performance of the imager 260.

The stack 272 is then manufactured on the base member 271, as shown in Fig. 11B. The optical device production apparatus 210 forms the stack 272 in accordance with the manufactured form data computed based on the acquired image. After forming the stack 272, the optical device production apparatus 210 acquires a captured image indicating the optical performance of the imager 260 for which compensation by the optical device 270 is made. The optical device production apparatus 210 determines the optical performance of the imager 260 based on the acquired image and determines whether the target condition is met. If the target condition is not met, the optical device production apparatus 210 computes corrective manufactured form based on the acquired image and corrects the form of the optical device 270. If the target condition is met, the manufacturing of the optical device 270 is terminated.

Lastly, a protective member 278 is built in the housing 264, as shown in Fig. 11C. The protective member 278 is a member for protecting the stack 272 formed on the base member 271. It is desired that the protective member 278 be comprised of a uniform plate-shaped member to restrict the impact on the optical performance of the imager 260 associated with providing the protective member 278 into the imaging optical system. Attachment of the protective member 278 completes the production of the imager 260. The protective member 278 may be omitted.

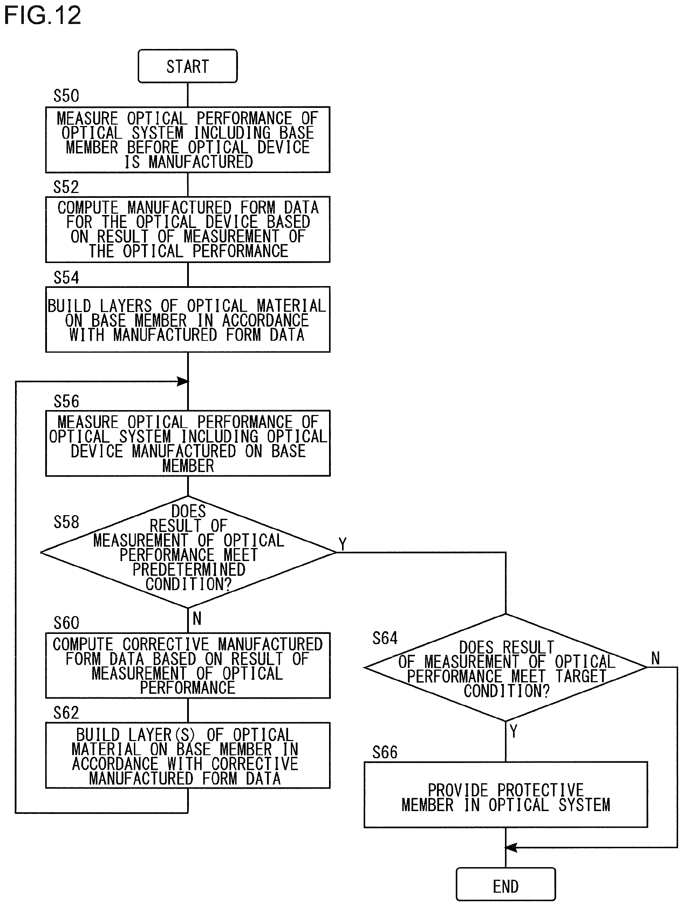

Fig. 12 is a flowchart showing the flow of operation of the optical device production apparatus 210. The optical device production apparatus 210 measures the optical performance of the optical system including the base member 271 before the optical device 270 is manufactured (S50) and computes manufactured form data for the optical device 270 based on the result of measurement of the optical performance (S52). Layers of optical material are built on the base member 271 in accordance with the manufactured form data thus computed (S54), and the optical performance of the optical system including the optical device 270 manufactured on the base member 271 is measured (S56). If the result of measurement of the optical performance does not meet the predetermined condition (N in S58), the corrective manufactured form data is computed based on the result of measurement of the optical performance (S60), layers of optical material are built on the base member 271 in accordance with the corrected manufactured form data, and the steps in S56 and S58 are performed again. If the result of measurement of the optical performance meets the predetermined condition (Y in S58) and meets the target condition (Y in S64), the protective member for protecting the stack 272 is provided in the optical system (S66), and the flow is terminated. If the target condition is not met (N in S64), S66 is skipped and the flow is terminated.

In accordance with this embodiment, the imager 260 in which the optical device 270 is built is used to measure the optical performance of the imager 260 so that the optical performance of the imaging optical system as a whole can be directly measured and compensated. Even if a problem of optical aberration etc. was not identified when the imager 260 was designed, a problem of aberration etc. may occur due to lack of accuracy of installation of the imaging device 262 assembled in the imager 260. The aberration may differ depending on the individual imagers 260 produced so that the form of the compensation optical devices necessary for the individual imagers 260 may differ. In accordance with this embodiment, the imager 260 produced is directly measured to determine the form of the compensation optical device so that the optical device 270 having the proper compensation performance can be formed for each of the individual imagers 260. This can restrict variation in the optical performance between the individual imagers 260 and improve the quality of the imagers 260. Since the optical device 270 can be formed instantaneously using an additive manufacturing method based on the result of measurement of the optical performance of the imager 260.the production lead time of the imager 260 can be reduced.

### (Fourth embodiment)

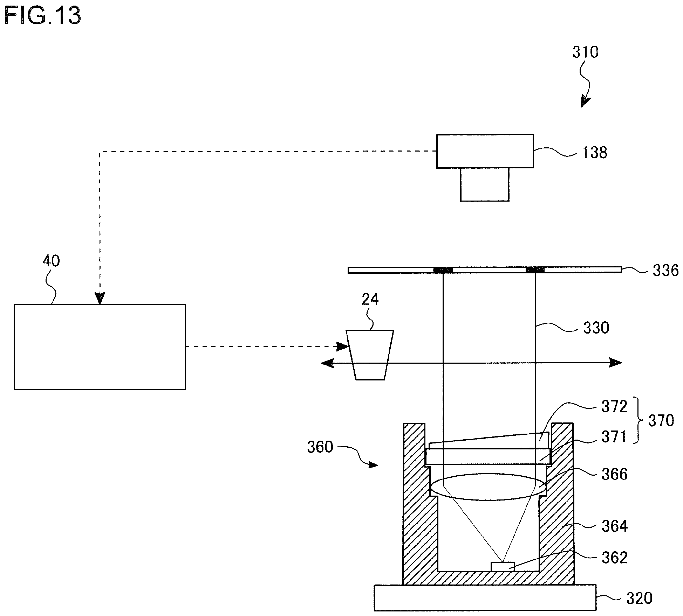

Fig. 13 schematically shows a configuration of an optical device production apparatus 310 according to the fourth embodiment. The optical device production apparatus 310 produces an optical device 370 built in the optical system of an illumination device 360. The illumination device 360 is a device built in a projector, an optical microscope, or the like as an illumination module. The optical device production apparatus 310 differs from the foregoing embodiments in that the optical device production apparatus 310 does not include a light source for measurement and the illumination device 360 in which the optical device 370 is built is used as a light source. A description will now be given of the optical device production apparatus 310, highlighting difference from the foregoing embodiments.

The optical device production apparatus 310 includes a fixture 320, the manufacturing head 24, an evaluation screen 336, the camera 138, and the controller 40. The manufacturing head 24, the camera 138, and the controller 40 are configured similarly to those of the foregoing embodiments.

The fixture 320 is a member for supporting the illumination device 360 and fixes the illumination device 360 at a position suitable for the manufacturing of the optical device 370. The evaluation screen 336 is a diffusing screen of a transmission type for imaging an optical characteristic of an illumination light 330 output from the illumination device 360 by using the camera 138. The evaluation screen 336 is printed with marks indicating reference positions to enable evaluation as to whether the position of illumination by the illumination light 330 is proper. Fig. 13 shows that the illumination light of the illumination device 360 properly illuminates an area between the marks on the evaluation screen 336. Th evaluation screen 336 as well as the camera 138 functions as a "measurement means" for measuring the optical performance of the illumination device 360.

The illumination device 360 includes a light emitting device 362, a housing 364, an illumination lens 366, and an optical device 370. The light emitting device 362 is a semiconductor light emitting device such as a light emitting diode and a laser diode. The housing 364 is a member for accommodating and fixing the light emitting device 362, the illumination lens 366, and the optical device 370 and has a recess or a step to allow these optical components to be mounted. The illumination lens 366 collimates the output light from the light emitting device 362 and converts the collimated light into the illumination light 330 traveling toward a target of illumination. The illumination lens 366 is illustrated as a single convex lens, but the configuration of the illumination lens 366 is non-limiting and a lens group including a plurality of lenses may form the illumination lens 366.

The optical device 370 is a compensation optical device for compensating the optical performance of the illumination device 360. For example, the optical device 370 is used to compensate the aberration caused by the illumination lens 366 or compensate the aberration caused by the installation allowance of components forming the illumination device 360. For example, the optical device 370 is configured to compensate a shift in the light distribution of the illumination light 330 due to a shift in the position of installation of the light emitting device 362 and is configured such that the stack 372 is asymmetric in shape. The optical device 370 is formed by manufacturing the stack 372 on the base member 371 mounted in the housing 364 of the illumination device 360.

The illumination device 360 fixed on the fixture 220 is connected to the controller 40. The illumination device 360 is operated based on a control signal from the controller 40 and outputs the illumination light 330 toward the evaluation screen 336.

The controller 40 causes the evaluation screen 336 illuminated by the illumination light 330 to be imaged by the camera 138 and acquires the image of the evaluation screen 336 as the result of measurement of the optical performance of the illumination device 360. If the result of measurement of the optical performance does not meet the target condition, the controller 40 computes a manufactured form of the compensation optical device for compensating the optical performance and manufactures the stack 372 on the base member 371 in accordance with the computed manufactured form data.

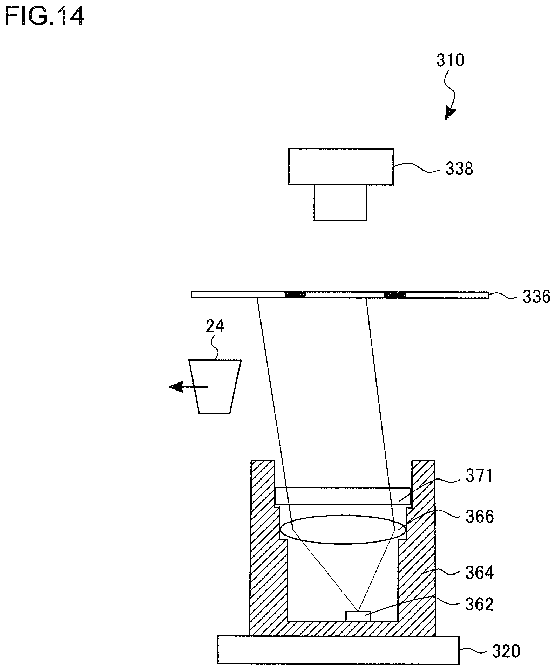

Fig. 14 schematically shows how the optical device 370 is manufactured and shows how the optical performance of the illumination device 360 is measured before manufacturing the optical device 370. The light emitting device 362, the illumination lens 366, and the base member 371 forming the imaging optical system of the illumination device 360 are mounted in the housing 364, and the base member 371 is exposed at one end of the illumination optical system. The optical device production apparatus 310 causes the illumination light 330 to be output from the illumination device 360 in this state and images the evaluation screen 336 illuminated by the illumination light 330.

Subsequently, the optical device production apparatus 310 computes manufactured form data for the stack 372 based on the image of the evaluation screen 336 and forms the stack 372 in accordance with the computed manufactured form data. The optical device production apparatus 310 measures the optical performance of the illumination optical system including the manufactured optical device 370 and terminates the manufacturing when the result of measurement meets the target condition. The optical device production apparatus 310 may provide a protective member for protecting the surface of the manufactured optical device 370 in the illumination device 360.

According to this embodiment, the same advantage as that of the third embodiment is achieved.

### (Fifth embodiment)

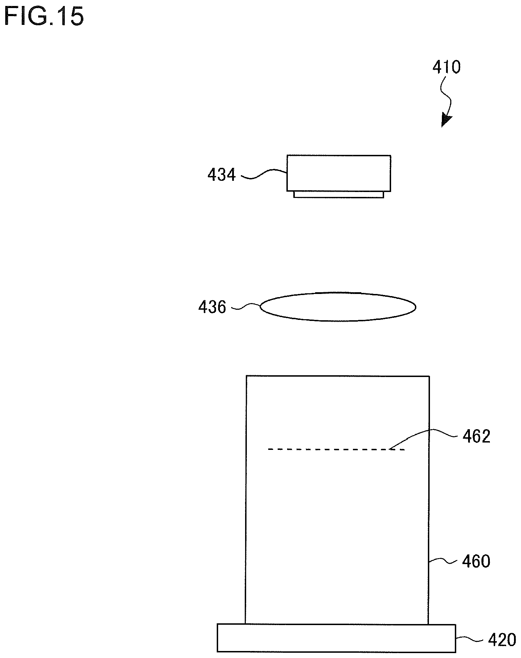

Fig. 15 schematically shows a method of measuring the optical performance according to the fifth embodiment. An optical device production apparatus 410 according to this embodiment is used to produce an optical device built in a pupil plane 462 of an optical device 460. A description will be given of the optical device production apparatus 410, highlighting differences from the foregoing embodiments.

The optical device production apparatus 410 includes a fixture 420 for fixing the optical device 460, a sensor 434 and a measurement optical system 436 for measuring the optical performance on the pupil plane 462. The measurement optical system 436 is an optical system for forming a conjugate plane of the pupil plane 462. The sensor 434 is positioned on the conjugate plane of the pupil plane 462. The optical device production apparatus 410 obtains a result of measurement of the optical performance of the optical device 460 on the pupil plane 462 by acquiring a result of measurement by the sensor 464. The optical device production apparatus 410 computes manufactured form of a compensation optical system that should be built in the pupil plane 462 based on the optical performance thus acquired and forms the optical device in accordance with manufactured form data thus computed. The optical device thus formed is built in the pupil plane 462 of the optical device 460.

According to this embodiment, the compensation optical device for compensating the optical performance of the optical device 460 on the pupil plane 462 can be formed in accordance with the optical performance. For example, the compensation optical device capable of properly compensating the wavefront on the pupil plane 462 can be formed by measuring the pupil aberration or wavefront aberration on the pupil plane 462. For compensation of the aberration, etc. of an optical system, it may sometimes be easier to compensate the aberration, etc. by building a compensation device at a position close to the pupil plane than at a position distanced from the pupil plane. When it is attempted to position a compensation optical device close to the imaging device to compensate the aberration of an imaging optical system, for example, it will be required to form an accordingly finer and more highly precisely formed stack. Meanwhile, when it is attempted to position a compensation optical device at a position close to the pupil plane and distanced from the imaging device, an optical device having a relatively large structure can be used so that the accuracy required in the manufactured form can be lowered. Thus, in accordance with this embodiment, an optical device having effective compensation performance can be produced relatively easily.

The embodiments of the present invention are not limited to those described above and appropriate combinations or replacements of the features of the embodiments are also encompassed by the present invention. The embodiments may be modified by way of combinations, rearranging of the processing sequence, design changes, etc., based on the knowledge of a skilled person, and such modifications are also within the scope of the present invention.

### [DESCRIPTION OF THE REFERENCE NUMERALS]

10 ... optical device production apparatus, 24 ... manufacturing head, 32 ... light source, 34 ... sensor, 40 ... controller, 42 ... measurement system control means, 44 ... acquisition means, 46 ... optical performance determination means, 48 ... manufactured form computation means, 50 ... additive manufacturing control means, 52 ... storage means, 70 ... optical device, 71 ... base member, 72 ... stack, 110 ... optical device production apparatus, 136 ... screen, 138 ... camera, 170 ... optical device, 171 ... base member, 172 ... stack, 210 ... optical device production apparatus, 236 ... evaluation chart, 260 ... imager, 262 ... imaging device, 266 ... imaging lens, 270 ... optical device, 271 ... base member, 272 ... stack, 275 ... ultraviolet light shielding layer, 278 ... protective member, 310 ... optical device production apparatus, 336 ... evaluation screen, 338 ... camera, 360 ... illumination device, 362 ... light emitting device, 366 ... illumination lens, 370 ... optical device, 371 ... base member, 372 ... stack, 410 ... optical device production apparatus, 434 ... sensor, 436 ... measurement optical system, 460 ... optical device, 462 ... pupil plane

### [INDUSTRIAL APPLICABILITY]

The present invention can be used in the manufacturing of optical devices.

## Claims

1. An optical device production apparatus comprising:
an additive manufacturing means that manufactures an optical device by successively building layers of optical material; and
an acquisition means that acquires a result of measurement of an optical performance of an optical system including the optical device manufactured, wherein
the additive manufacturing means terminates manufacturing the optical device on the condition that the result of measurement acquired by the acquisition means meets a predetermined condition.

2. The optical device production apparatus according to claim 1, further comprising:
a manufactured form computation means that computes a manufactured form for manufacturing the optical device, based on the result of measurement acquired by the acquisition means, wherein
the additive manufacturing means manufactures the optical device in accordance with the manufactured form computed by the manufactured form computation means.

3. The optical device production apparatus according to claim 2, wherein
the acquisition means acquires the result of measurement of the optical performance of the optical system including the optical device being manufactured,
the manufactured form computation means computes the manufactured form built on the optical device being manufactured, based on the result of measurement of the optical performance of the optical system being manufactured, and
the additive manufacturing means builds a layer of optical material on the optical device being manufactured in accordance with the manufactured form computed by the manufactured form computation means based on the result of measurement of the optical performance of the optical system being manufactured.

4. The optical device production apparatus according to claim 2 or 3, wherein
the acquisition means acquires the result of measurement of the optical performance of the optical system before the optical device is manufactured,
the manufactured form computation means computes the manufactured form of the optical device based on the result of measurement of the optical performance of the optical system before the optical device is manufactured, and
the additive manufacturing means builds a layer of optical material in accordance with the manufactured form computed by the manufactured form computation means based on the result of measurement of the optical performance of the optical system before the optical device is manufactured.

5. The optical device production apparatus according to claim 4, wherein
the manufactured form computation means computes manufactured form of a compensation optical device for compensating the optical performance of the optical system before the optical device is manufactured, and
the additive manufacturing means manufactures the compensation optical device by building a layer of optical material in accordance with the manufactured form of the compensation optical device computed by the manufactured form computation means.

6. The optical device production apparatus according to any one of claims 1 through 5, wherein
the optical system includes a base member positioned at one end of the optical system, and
the additive manufacturing means manufactures the optical device by building a layer of optical material on the base member.

7. The optical device production apparatus according to claim 6, wherein
the additive manufacturing means is configured to build a layer of photo-curable resin on the base member by ultraviolet irradiation, and
the base member is configured to reduce an amount of ultraviolet transmittance.

8. The optical device production apparatus according to any one of claims 1 through 7, wherein
the additive manufacturing means manufactures the optical device so that an optical face of the optical device is a rotationally asymmetric face.

9. The optical device production apparatus according to any one of claims 1 through 8, wherein
the acquisition means acquires a result of measurement of light transmitted through the optical system.

10. The optical device production apparatus according to any one of claims 1 through 9, wherein
the optical system is an imaging optical system including an imaging device and an imaging lens, and
the acquisition means acquires image data captured by the imaging device.

11. The optical device production apparatus according to any one of claims 1 through 9, wherein
the optical system is an illumination optical system including a light source and an illumination lens, and
the acquisition means acquires a result of measurement of an illumination light output from the illumination optical system.

12. A method of producing an optical device comprising:
manufacturing an optical device by successively building layers of optical material; and
acquiring a result of measurement of an optical performance of an optical system including the optical device manufactured, wherein
manufacturing of the optical device is terminated on the condition that the result of measurement of the optical performance of the optical system meets a predetermined condition.

13. The method of producing an optical device according to claim 12, further comprising:
providing a protective member for protecting an optical face of the optical device manufactured into the optical system.
